Europäisches Patentamt

**European Patent Office**

**Office européen des brevets**

(11) Publication number: **0 034 639**
**A1**

# (12) EUROPEAN PATENT APPLICATION

(21) Application number: **80100865.7**

(22) Date of filing: **21.02.80**

(51) Int. Cl.³: **C 21 C 5/36**
**C 21 C 7/076**

(43) Date of publication of application:
**02.09.81 Bulletin 81/35**

(84) Designated Contracting States:
**AT BE CH DE FR GB LU NL SE**

(71) Applicant: **PETERLONGO, GIANCARLO**
**7, Via de Togni**
**I-20123 Milano(IT)**

(72) Inventor: **Crespi, Giovanni**
**46, Via Matteotti**
**I-28038 S. Maria Maggiore (Novara)(IT)**

(74) Representative: **Faggioni, Giovanmaria, Dr. et al,**
**Fumero-Studio Consulenza Brevetti**
**Widenmayerstrasse 5/IV**
**D-8000 München 22(DE)**

(54) **Synthetic flux for steel slag.**

(57) Synthetic flux for steel slag consisting of a mixture of aluminous or alumina residues with one or more of the compounds of the group: clay, marl, sodium carbonate, borax, nepheline, bentonite. An important advantage of the above mixture is its eliminating the presence of fluorite or fluorispar.

EP 0 034 639 A1

"SYNTHETIC FLUX FOR STEEL SLAG"

The object of the present invention is a flux or fluidifier for steel slag.

The important function of slag in steel working and smelting processes is well known: the slag, reacting with the molten metal, absorbs various impurities, as silicates, oxides, sulphur, phosphorous and others.

The reaction between slag and molten metal is very important for steel production both in arc furnaces and in Martin Siemens furnaces and in oxygen converters – wherein, over large quantities of material a continuous and diffused contact between the slag and the metal being smelted has to be produced – and this is why the forming of the slag is studied with particular care.

For the process to start regularly, it is first of all necessary for the slag to be formed as rapidly as possible and with the right degree of viscosity . This rapidity in the forming of the slag is far more felt in modern technique, where one tends to accelerate to the utmost all the stages of the steel working process.

On the other hand, the slag is formed by introducing on the metal bath lime or limestone, which take a certain time to reach the molten state and to start the slagging action. To shorten this melting time, it is known to add to the lime and limestone some fluidifying agents or fluxes. As a general rule, the influence of the flux in the slag lowers the density of the same and the adhesion between steel and slag, favouring the rise of the material to be eliminated.

A very well known and widespread fluidifier used nowadays is essentially fluorite, or fluorspar which however contains various impurities, as for example silicates, silica and sulphur, which produce delays and inconveniences in the production process. Moreover, the melting fluorite or fluorspar normally causes the development of harmful gases, as silicon tetrafluoride.

It has also been proposed to use fluidifiers based on premixed mixtures of fluorite with other natural minerals, as dolomite, limestone and bauxite, however essentially for economical reasons but with no improvement of the technical characteristics of the actual fluidifier.

The chemical composition of the slag in oxygen converters is on the average the following:

| | |
|---|---|
| CaO | 30-41% |
| SiO2 | 25-27% |
| Al2O3 | 2-3% |
| Fe oxides | 24-29% |
| MgO | 5-8% |
| MnO | 4-7% |
| P2O5 | 1-1.5% |
| S | 0.2-0.3% |

while, in arc furnaces, the slag contains a smaller quantity of Fe oxides. From the chemical point of view, it is fundamental for this composition to keep a pre-established degree of basicity, which is normally expressed by the formula:

$$\text{basicity index} = (CaO + MgO) / (SiO_2 + P_2O_5) = 3.5-3.7$$

The object of the present invention is to propose a new type of flux for steel slag, being apt to answer the aforespecified requirements of basicity but allowing, on the other hand, to eliminate the cited drawbacks of the known fluidifiers, in particular to eliminate the presence of great or small quantities of fluorite both alone and in mixture.

This result is obtained with the fluidifier according to the present invention, which is essentially characterized in that it consists of a synthetic mixture of aluminous and/or alumina residues with one or more of the compounds forming part of the group: clay, marl (calcareous clay), sodium carbonate, borax (sodium borate), nepheline (silicate and orthosilicate of Al, Na, K), and bentonite.

It should immediately be pointed out that, by the term "aluminous or alumina residues" are meant scrap products coming from the production of aluminum, the average chemical analysis of which is the following:

70–90%    alumina (Al2O3)

6–15%     metallic aluminum

10–12%        mixtures of aluminum hydroxide, of aluminum trihydrate and of calcium–aluminum silicates

The various constituents may enter the formation of the mixture according to the present invention in the following proportions:

from 60 to 85% aluminous and alumina residues

from 10 to 20% clay

from 5 to 10% borax

from 5 to 10% sodium carbonate

from 10 to 20% marlfrom 5 to 30% nephelinefrom 5 to 10% bentonite

Some examples of preferred compositions according to the present invention are given in the following table:

|  | I | II | III | IV | V | VI |
|---|---|---|---|---|---|---|
| Aluminous and alumina residues | 85% | 80% | 70% | 70% | 66% | 65% |
| Marl | 5% | 5% | 10% | 10% | -- | -- |
| Clay | -- | -- | 10% | -- | 10% | -- |
| Sodium carbonate | 5% | 5% | 10% | 10% | 10% | 8% |
| Borax | -- | 5% | -- | 5% | -- | -- |
| Nepheline | 5% | 5% | -- | 5% | 7% | 27% |
| Bentonite | -- | -- | -- | -- | 7% | -- |

The essential object of the aforedescribed flux mixture is to favour and accelerate the formation of reactive slag with desulphu-

0034639

rizing and dephosphorizing qualities.

An additional object of the present invention is however to also favour a slag reducing reaction. To this end, a further object of the present invention consists in the use of sodium hydroxide (NaOH) and of calcium carbide (CaC2).

The addition of NaOH to the flux is however not so simple, as the flux is thereby made highly hygroscopic and its storage, in the large quantities required for steel works, becomes extremely problematic. On the other hand, also the addtion of CaC2 is in turn very delicate, since this product may give rise, with humidity, to the forming of explosive mixtures.

This problem is however overcome, according to the present invention, by prodiving to mix 1 part of CaC2 with 1 or 2 parts of NaOH and furthermore, preferably, with 2 parts of sodium carbonate. In this way, it has been possible to establish that the mixture — dried and reduced into grains — is sufficiently stable. A better result is obtained by melting said mixture (taking advantage, for this purpose, of the low melting point of NaOH).

An even further stability — and, above all, resistance to humidity — is conferred by introducing in this mixture also 2 parts of clay and 3 parts of limestone.

This reducing mixture, essentially based on NaOH and CaC2, is introduced in the aluminous flux according to the invention in the proportion of from 2 to 8%, according to the type of steel produced.

Moreover it has been surprisingly found out that the addition of alkaline salts, specifically NaOH and/or sodium carbonate to the aluminous flux, carries on a supplementary function of purification. As a matter of fact aluminous flux may easily contain impurities which, reacting with the alkaline salts, create compounds being afterward absorbed in the lime slag of the furnace.

Such alkaline salts are added to the aluminous flux in a percentage determined with respect to the quantity of the impurities in the flux, and in any case inferior to 10%. They may be added in a solution state or in a dry state.

The flux mixture according to the present invention is preferably prepared in pieces, grains or granules, for example through pelleting techniques known per se. For this purpose, binders can be added to the mixture, in proportions varying between 2 and 5%, consisting for example of the known binding resins and hardeners normally employed in the pelleting process, in the refractory mixtures and in the molding sands, such as the silicone resins, the epoxy resins, the silicon-organic resins, polyethylene oxide, ethylcellulose hydroxide , and the like, which volatilize at the melting temperature of the steel and do not affect, therefore, the correct forming of the slag.

Furthermore, the use of molasses as a binder has been found particularly interesting. This product, which may be utilized at the pure state, owing to its intrinsic composition transforms itself - at the high temperatures to which the flux is subjected - leading to the formation of nascent carbon; this in turn favours the reducing reaction of this slag.

Considering that the modern metallurgical technique involves large quantities of oxygen (both in oxygen converters and in arc furnaces),the reducing feature of the flux, and hence of the slag, becomes highly important for realizing a certain neutralization of the excess of oxygen present in the actual molten slag.

Finally, there is also the possibility to agglomerate the flux mixture in a way known per se by making use of pitch, eventually together with an equal quantity of molasses.

The fluidifier according to the present invention has been tested in arc furnaces of 40, 60 and 70 tons and in oxygen converters, in carbon steel castings, with excellent results, particularly for what concerns the prompt formation of the slag. The tests have been carried out also in castings prepared with different types of slags, always with excellent results.

An essentially positive side effect has moreover been found in

0034639

a reduction of the erosion effect of the furnace refractory lining
- at slag level - which can clearly be ascribed to the slightly basic
characteristics of the flux according to the invention.

·CLAIMS

1. Synthetic flux for steel slag, characterized in that it consists of a mixture of 60 to 85% of aluminous and/or alumina residues with one or more of the compounds of the group: clay, marl, sodium carbonate, borax, nepheline, bentonite.

2. Flux as in claim 1, wherein the mixture comprises from 10 to 20% of clay.

3. Flux as in claim 1, wherein the mixture comprises from 5 to 10% of borax .

4. Flux as in claim 1 wherein the mixture comprises from 5 to 20% of sodium carbonate.

5. Flux as in claim 1, wherein the mixture comprises from 10 to 20% of marl.

6. Flux as in claim 1, wherein the mixture comprises from 5 to 30% of nepheline.

7. Flux as in claim 1, wherein the mixture comprises from 5 to 10% of bentonite.

8. Flux as in claim 1, further comprising from 2 to 8% of a reducing mixture, essentially based on $NaOH$ and $CaC2$.

9. Flux as in claim 9, wherein said reducing mixture is formed by 1 part of $CaC2$ and by 1 to 2 parts of $NaOH$, and further comprises 2 parts of sodium carbonate , this reducing mixture being firstly stabilized by melting and then mixed to the flux.

10. Flux as in claim 10, wherein said reducing mixture also comprises 2 parts of clay and 3 parts of limestone.

11. Flux as in claim 1 or 10 wherein the mixture is prepared as an agglomerate, in form of granules or pieces, by means of a binder of the group: pitch, tar or molasses.

12. Fluidifying process of a steel slag, characterized in that it makes use of a flux as in anyone of the preceding claims, in the proportion of 5 to 8% calculated in respect of the weight of the lime and/or limestone introduced into the furnace for the forming of the slag.

0034639

European Patent
Office

EUROPEAN SEARCH REPORT

Application number

EP 80 10 0865

| DOCUMENTS CONSIDERED TO BE RELEVANT | | | CLASSIFICATION OF THE APPLICATION (Int Cl. ') |
|---|---|---|---|
| Category | Citation of document with indication, where appropriate, of relevant passages | Relevant to claim | |
| | FR - A - 2 132 182 (SIDERPATENTS)<br>* Claims 1-4,7,10 *<br><br>-- | 1,11,<br>12 | C 21 C 5/36<br>7/076 |
| | US - A - 4 010 023 (BOWDEN)<br>* Claim 1; column 2, lines 4-9,<br>17-21 *<br><br>-- | 1,11 | |
| | GB - A - 1 450 385 (FOSECO)<br>* Claims 1,5,7; page 2, lines 54-<br>56, 66-68 *<br><br>-- | 1,11,<br>12 | TECHNICAL FIELDS SEARCHED (Int.Cl.³) |
| | US - A - 4 050 925 (ARTHUR F. JOHN-<br>SON)<br>* Claims 1,2; column 9, line 68<br>and column 10, line 16 *<br><br>-- | 1,2 | C 21 C |
| A | US - A - 3 893 846 (TAKASHIMA)<br>* Claims 1,2 *<br><br>-- | | |
| A | US - A - 2 927 852 (BOWDEN)<br>* Claim 1 *<br><br>---- | | |

The present search report has been drawn up for all claims

| Place of search | Date of completion of the search | Examiner |
|---|---|---|
| The Hague | 30-09-1980 | SCHROEDER |

EPO Form 1503.1  06.78